# EUROPEAN PATENT APPLICATION

(11) **EP 2 026 039 A2**
(43) Date of publication of application: **18.02.2009**
(21) Application number: 08161435.6
(22) Date of filing: 30.07.2008
(51) Int. Cl.: G01C 21/36, G08G 1/0969

(54) **Map display device and method of providing additional information on a map display**

(30) Priority: 02.08.2007 JP 2007202145
(71) Applicant: Sony Corporation, Tokyo 108-0075 (JP)
(72) Inventor: Yokoyama, Tadashi, TOKYO 108-0075 (JP)
(74) Representative: Beder, Jens

(57) **Abstract**

An information processing device includes: a display section that displays a map image based on map data; a face data storage section that stores districts corresponding to specific areas of the map image as faces (F11-F24) of the map image; an additional information storage section that stores pieces of additional information associated with the faces; a current position identification section that identifies a current position (P2) on the map image; an additional information output section that makes a determination as to whether the current position (P2) is inside the face, and if the current position is inside the face, reading out and outputting the piece of additional information associated with the face.

## Description

### CROSS REFERENCES TO RELATED APPLICATIONS

The present invention contains subject matter related to Japanese Patent Application JP2007-202145 filed in the Japanese Patent Office on August 2, 2007, the entire contents of which being incorporated herein by reference.

### BACKGROUND OF THE INVENTION

### FIELD OF THE INVENTION

The present invention relates to an information processing device and additional information providing method, and is preferably applied to a portable navigation device (referred to as "PND", hereinafter), for example.

### DESCRIPTION OF THE RELATED ART

Electronics devices, such as cell phones and digital cameras, have recently advanced dramatically. Many are usually shipped with a camera for taking a picture or a video. Usually, only information about date and time is attached to the image data shot by such electronics devices. Along with the information such as date and time, serial numbers may be attached to motion-picture data, or video data, as a file name. Checking such information as date, time and serial numbers, may be the only way for a user to intuitively distinguish each piece of data, or where it was taken.

If users want to know the contents of the image data or the motion-picture data, they have to rely on their own memory with the help of date-and-time information, or have to open the data on a personal computer or the like.

Especially, certain types of cell phones put on the market are already equipped with Global Positioning System (GPS) module, which allows a user to recognize where he/she is. However, such features are not fully exploited: the use of the positional information generated by GPS is limited, that is, the positional information is mainly used to access map data stored in a server to guide a user. There is still a room for improvements in utilizing such features.

Since the positional information is linked to additional information related to the position, a vehicle navigation system's technology precedes other electronics devices. For example, in order to display address information of the current position of a car (or vehicle), the vehicle navigation system is equipped with an address-displaying function, storing the pieces of address information associated with the map data. Using the positional information acquired from a GPS satellite or the like, the vehicle navigation system displays an address. However, since the vehicle navigation system needs a large memory to store the enormous map data, and can display only an address, it is not user-friendly.

On the other hand, as disclosed in Jpn. Pat. Laid-open Publication No. H11-337354, there is a visitor information device that plays an introduction video or audio data introducing a site at appropriate time: it displays on a display section a certain shape of an object (polygon) whose periphery is generated by connecting a plurality of points, such that the polygon contains a sightseeing destination indicated by a symbol of "×," and when a vehicle enters the polygon, it plays the introduction video or audio data.

### SUMMARY OF THE INVENTION

However, when the vehicle enters the polygon, the above visitor information device plays only the introduction video or audio data and does not provide any other information, or contents, which users may want to have. Accordingly, there is a problem that it is difficult for such devices to provide valuable additional information for users.

The present invention has been made in view of the above points and is intended to provide an information processing device and additional information providing method that can efficiently provide valuable additional information regarding a current position in line with users' desire.

In one aspect of the present invention, an information processing device comprising: display means for displaying a map image based on map data; face data storage means for storing areas corresponding to specific districts of the map image as faces of the map image; additional information storage means for storing pieces of additional information associated with the faces; current position identification means for identifying a current position on the map image; and additional information output means for making a determination as to whether the current position is inside the face, and if the current position is inside the face, reading out and outputting the piece of additional information associated with the face. Accordingly, when the current position enters a face, it can offer users valuable additional information related to the face, based on the relationship between the current position and the face.

According to an embodiment of the present invention, when the current position enters a face, it can offer users valuable additional information related to the face, based on the relationship between the current position and the face. Thus, the information processing device and additional information providing method can efficiently provide valuable additional information related to the current position in line with users' desire.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
FIG. 1 is a schematic diagram illustrating a vector map image;
FIG. 2 is a schematic diagram illustrating a vector map image in which each face has a different color:
FIG. 3 is a schematic diagram illustrating a vector map image after roads and characters are removed;

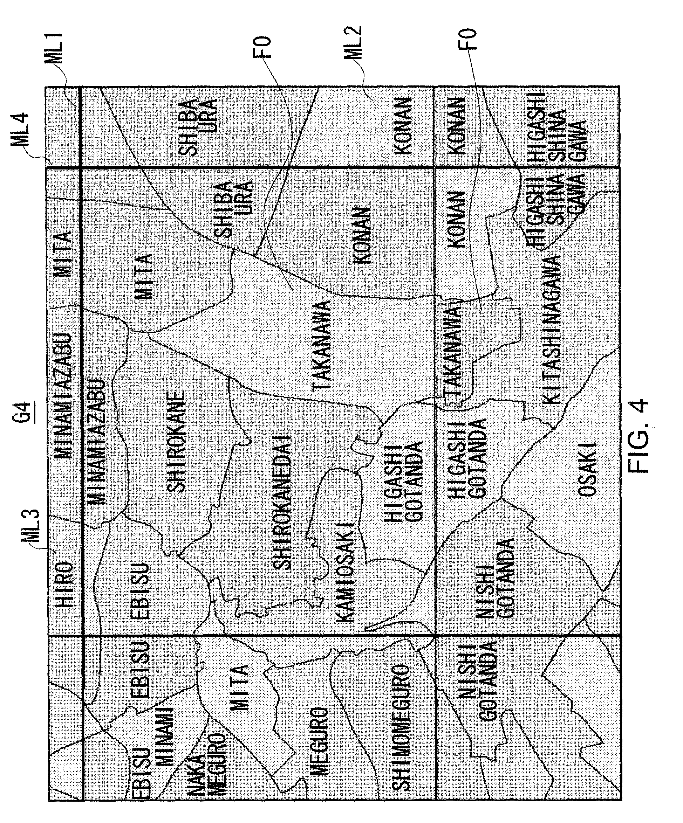

FIG. 4 is a schematic diagram illustrating a vector map image associated with the pieces of additional information, or boldface place names;
FIG. 5 is a schematic diagram illustrating the acquisition result of the piece of additional information associated with a piece of face data of the vector map image;
FIG. 6 is a schematic diagram illustrating a vector map image in which planes are piled up;
FIG. 7 is a schematic diagram illustrating the state after the planes are piled up;
FIG. 8 is a schematic block diagram illustrating the circuit configuration of PND;
FIG. 9 is a schematic diagram illustrating the navigation operation when PND is situated inside a vehicle;
FIG. 10 is a schematic diagram illustrating two planes piled up;
FIG. 11 is a flowchart illustrating a procedure of additional information providing process when PND is situated inside a vehicle;
FIG. 12 is a schematic diagram illustrating a restaurant introduction image as a piece of additional information;
FIG. 13 is a schematic diagram illustrating the navigation operation when PND is not situated inside a vehicle;
FIG. 14 is a schematic diagram illustrating three planes piled up;
FIG. 15 is a flowchart illustrating a procedure of additional information providing process when PND is not situated inside a vehicle;
FIG. 16 is a schematic diagram illustrating a character frame; and
FIG. 17 is a composite picture generated by combining a picture with the character frame.

### DETAILED DESCRIPTION OF PREFERRED EMBODIMENTS

An embodiment of the present invention will be described in detail with reference to the accompanying drawings.

### (1) Basic Concept

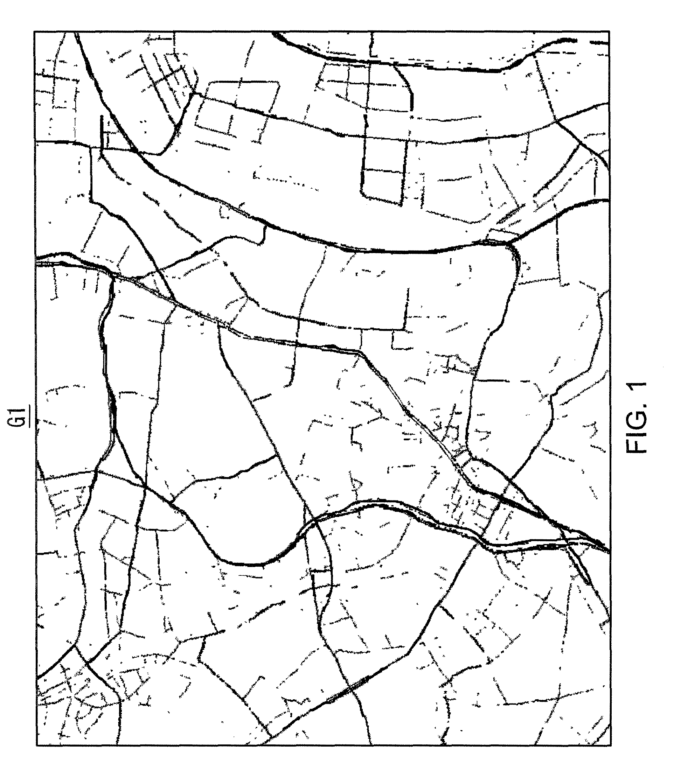

FIG. 1 shows a typical vector map image G1 in vector graphics formats, which is often used by PND for navigation. The elements of the map data include lines (used for displaying roads), texts (or characters), faces (including sites, which is sectioned as faces, of district corresponding to a certain area such as a park (green), a school (orange) or the like on the map), and the like.

On the vector map image G1, the face data are a collection of pieces of latitude-and-longitude information of the points inside the face. Using a piece of latitude-and-longitude information of a current position, PND can find out a corresponding place.

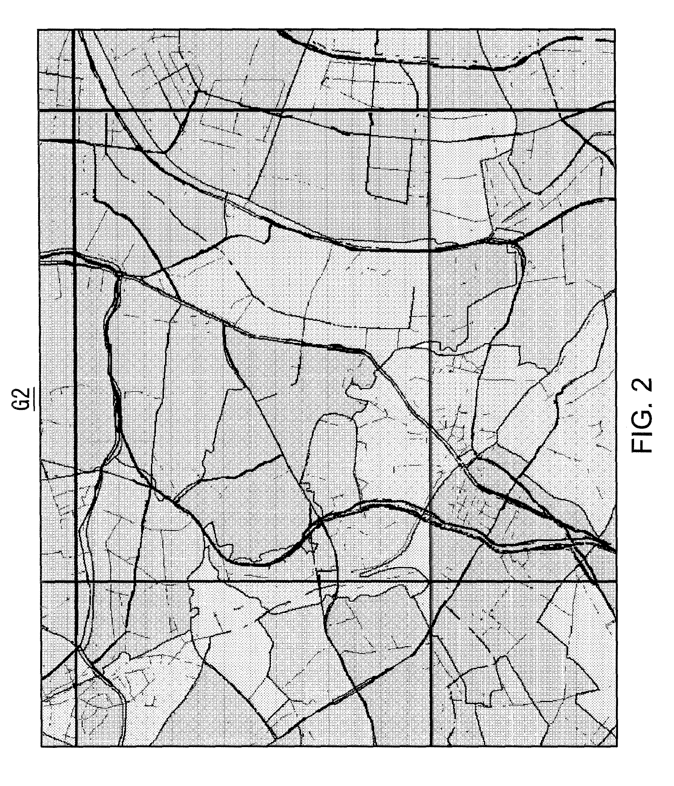

For example, PND divides the vector map image G1 (FIG. 1) into a plurality of faces whose place names in the address system are given in boldface type, such as "Shibaura," "Mita," "Shirokanedai," "Konan," and "Higashigotanda," as shown in FIG. 2. As a result, every location on the map belongs to one of the faces (each surrounded by a bold line in the diagram). In this manner, it is transformed into a vector map image G2 where each face stands out with a different color.

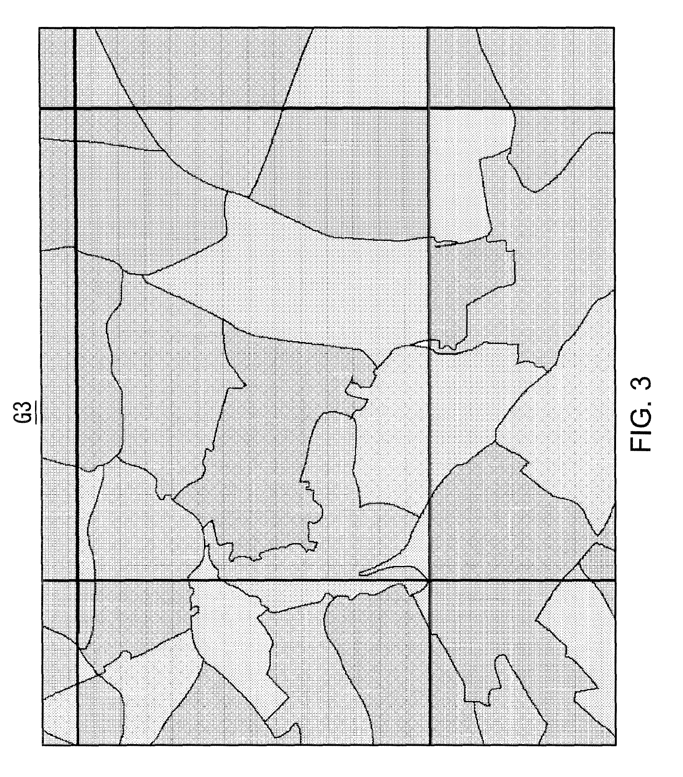

PND may be able to remove other elements, such as roads and characters, from the vector map image G2 (FIG. 2) to generate a vector map image G3. As shown in FIG. 3, the vector map image G3 includes only a plurality of faces (or face data).

PND associates the faces of the vector map image G3 (FIG. 3) with additional information, or corresponding boldface place names (such as "Shibaura," "Mita," "Shirokanedai," "Konan," and "Higashigotanda"), and stores those data in a data storage section (not shown), such as a hard disk drive. This allows PND to display a visible vector display image G4 where the faces are associated with the corresponding boldface place names.

For example, a face F0 is associated with boldface place name "Takanawa" on the vector map image G4. Accordingly, an area identified by the face F0 contains from "A-chome Takanawa" to "B-chome Takanawa," both of which belong to "Takanawa." The face F0 of "Takanawa" is associated with a piece of additional information, or a string of character "Takanawa," and stored in a data storage section.

Incidentally, PND is designed to display mesh lines ML1 to ML4, which divide the vector map image G4 in accordance with a predetermined scale. Accordingly, the face F0 of "Takanawa" seems to be divided into two sections, or an upper section and a lower section, by the mesh line L2. Since both sections are associated with boldface place name "Takanawa," users can recognize them without misunderstanding.

Before pinpointing a destination using the latitude-and-longitude data, PND searches the map, which is divided by the mesh lines ML1 to ML4 into areas, for an area containing the destination. This area contains several faces, one of which includes the destination. Based on boldface place names associated with the faces, PND identifies the face including the destination. This reduces time needed to find out the destination more than not using the mesh lines ML1 to ML4.

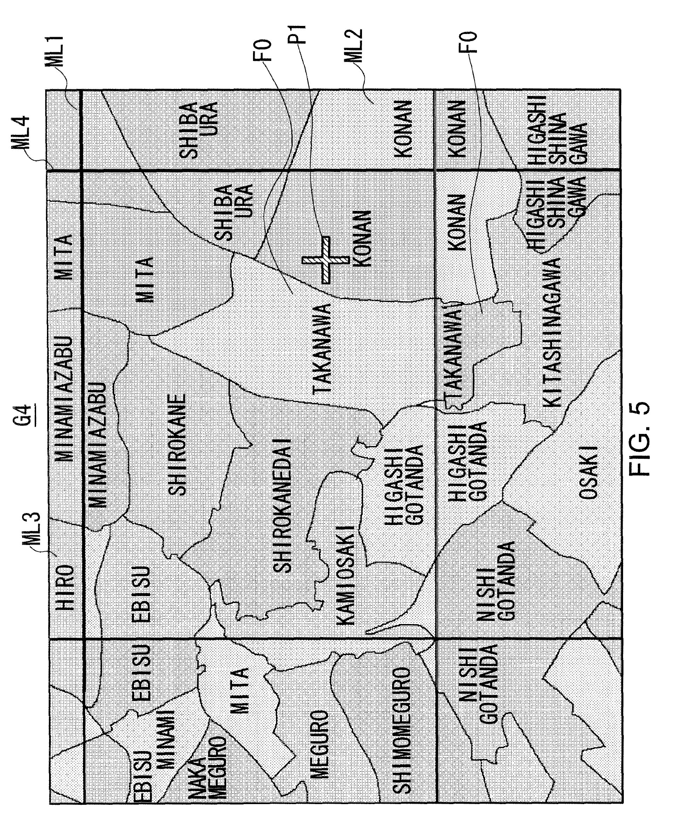

In fact, as shown in FIG. 5, PND may display a position mark P1, which indicates the current position of a vehicle detected by a GPS module, inside a face F0 corresponding to a certain piece of face data. In this case, PND reads out from the data storage section a piece of additional information (or a string of characters, or boldface place name "Konan," in this case) which is associated with the piece of face data, and displays the boldface place name "Konan" around the face F0 as additional information.

In this manner, the piece of additional information is associated with the face F0 (or the piece of face data) containing the position mark P0 indicating the current position, not with a point of the current position (latitude-and-longitude information). This allows PND to efficiently use the data storage section for storing and reading the pieces of additional information associated with the face F0.

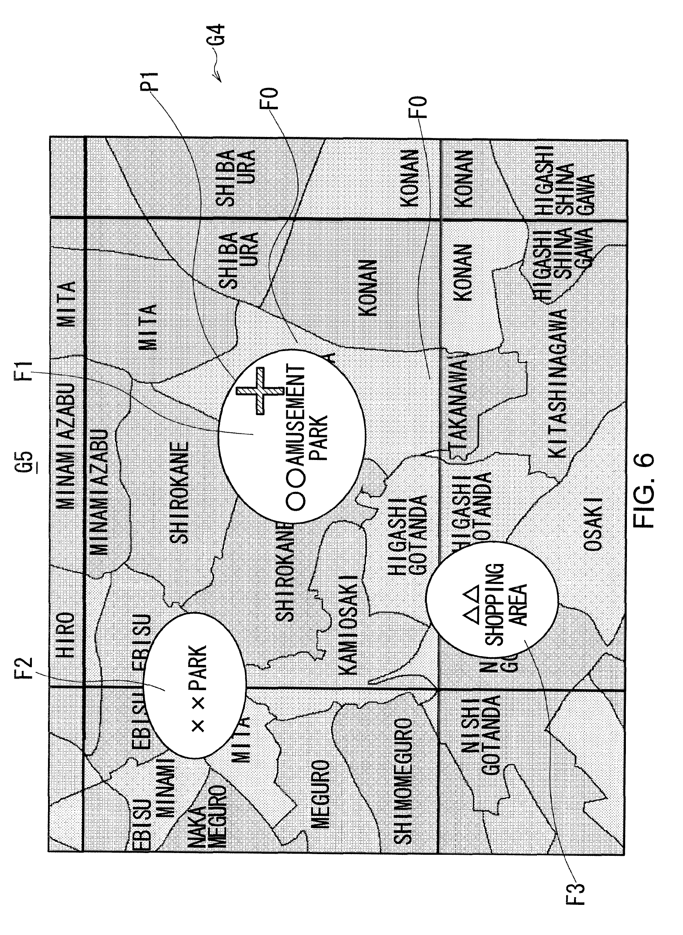

Moreover, as shown in FIG. 6, PND can generate a vector map image G5: the vector map image G5 is generated by superimposing faces F1 to F3, each of which is divided into an area of a different category, onto the vector map image G4 in which a plurality of faces (including the face F0) are associated with the corresponding boldface place names.

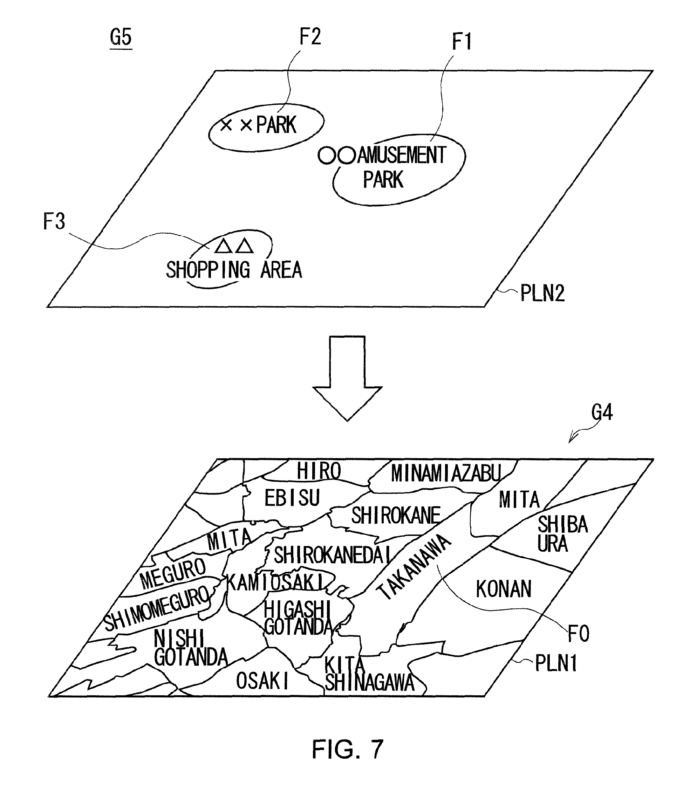

In this case, as shown in FIG. 7, PND generates the vector map image G5 by superimposing a plane PLN2 onto a plane PLN1: the plane PLN1 (or the vector map image G4) includes a plurality of areas (including the face F0), each of which is associated with a corresponding boldface place name, while the plane PLN2 includes faces F1 to F3 associated with areas of special place names (such as an amusement park, a park, a shopping area), whose categories are different from those of the plane PLN1.

If the current position mark P1 (FIG. 6) exists inside both the face F0 of "Takanawa" and the face F1 of "○○ Amusement Park," PND reads out both "Takanawa" and "○○ Amusement Park" as additional information from the data storage section and displays them.

### (2) Circuit Configuration of PND

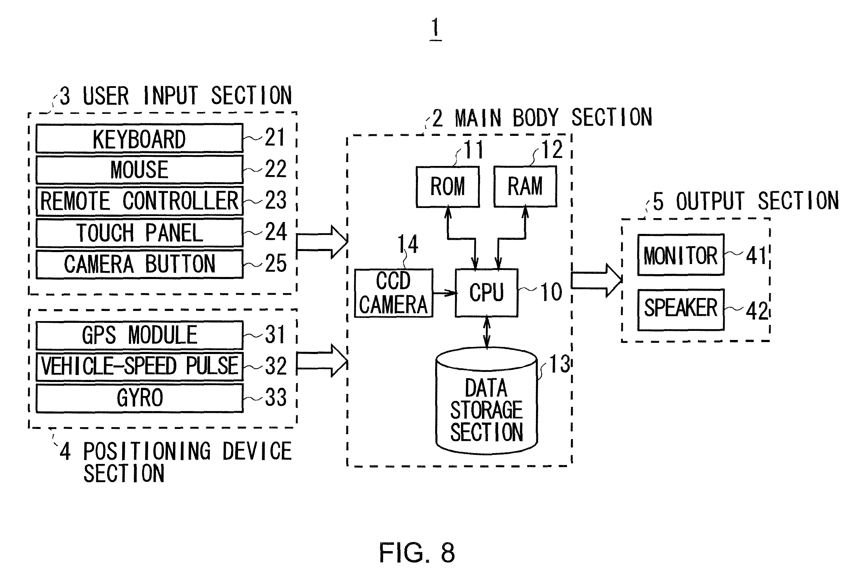

FIG. 8 shows the basic circuit configuration of PND, which realizes the above basic concept.

In FIG. 8, the numeral reference 1 denotes PND. PND 1 includes a main body section 2 to which a user input section 3, a positioning device section 4 and an output section 5 are connected. Central Processing Section (CPU) 10 of the main body section 2 executes a boot program, which is stored in Read Only Memory (ROM) 11, to read out a basic program from a data storage section (or hard disk drive) 13, and loads it onto Random Access Memory (RAM) 12. CPU 10 takes overall control of PND 1.

The user input section 3 includes a keyboard 21, a mouse 22, a remote controller 23, a touch panel 24, a camera button 25 and the like. Following a command input by a user through the user input section 3, CPU 10 of PND 1 reads out a predetermined application program (or an additional information providing program) from the data storage section 13, loads it onto RAM 12, and performs an additional information providing process (described later) based on information supplied from the positioning device section 4, which includes a Global Positioning System (GPS) module 31, a vehicle-speed pulse receiving circuit 32 for detecting a speed at which a vehicle is traveling, a gyro sensor 33 for detecting the inclination of a vehicle and the like. CPU 10 then outputs the result of the process through the output section 5, which includes a monitor 41 and a speaker 42.

Moreover, PND 1 is equipped with a Charge Coupled Device (CCD) camera 14. When the camera button 25 of the user input section 3 is pushed down, it takes a still image or motion picture.

### (3) Additional Information Providing Process

The following describes two cases: one is a case in which the additional information providing process is performed when PND 1 is situated on a vehicle, while the other is a case in which the additional information providing process is performed after a user takes PND 1 away from the vehicle and carries it with him/her.

### (3-1) Process Performed When PND Is Situated On Vehicle

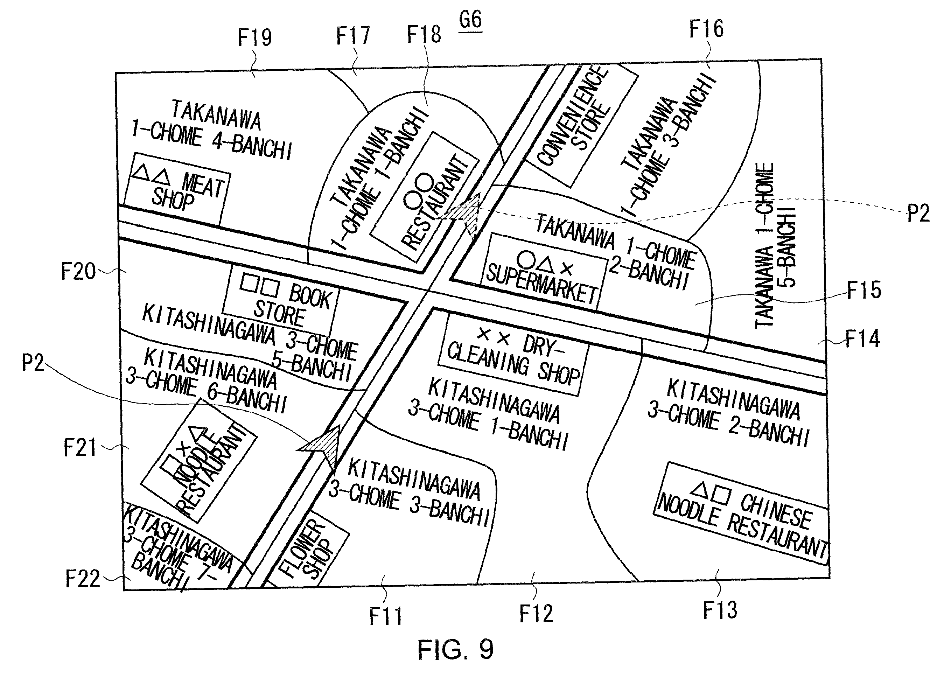

As shown in FIG. 9, PND 1 previously associates the vector map image G6's faces F11 to F24, each of which corresponds to an area recognized by a certain form of address (like "A-chome, B-banchi" in Japanese), with corresponding pieces of additional information, and stores the data in the data storage section 13. Each time a current position mark P2, which indicates the current position of a traveling vehicle, enters a different area, or one of the faces F11 to F24, PND 1 reads out a corresponding piece of additional information from the data storage section 13 and displays it.

In this case, the faces F11 to F22 abuts on the road on the map: the faces are divided along the center of the road. In Japan, vehicles drive on the left side of the road. If the vehicle runs down the road between the face F21 of "Kitashinagawa 3-chome, 6-banchi" and the face F11 of "Kitashinagawa 3-chome, 3-banchi," the current position mark P2 is displayed inside the face F21, not inside the face F11.

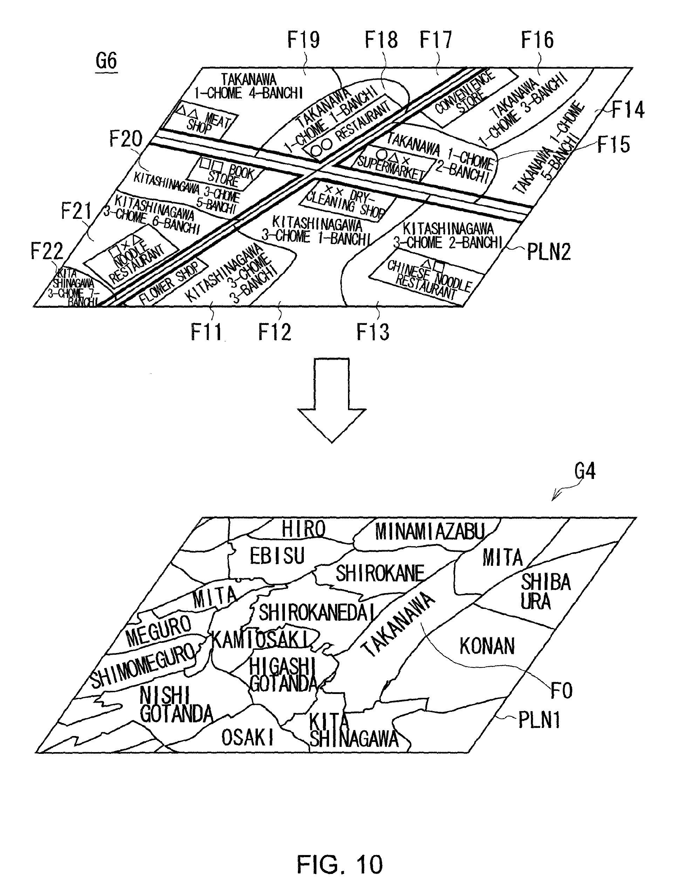

As shown in FIG. 10, PND 1 can generate a vector map image G6 by superimposing a plane PLN2 on a plane PLN1: the plane PLN1 (or the vector map image G4) includes a plurality of faces (including the face F0), each of which is associated with a corresponding boldface place name, while the plane PLN2 includes faces F11 to F22, each of which is sectioned by the Japanese postal address system (Chome and Banchi), whose categories are therefore different from those of the plane PLN1.

Therefore, if the current position mark P2 (FIG. 9), which indicates the current position of a user, exists inside both the face F0 of "Takanawa" of the plane PLN1 (FIG. 10) and the face F18 of "Takanawa, 1-chome, 1-banchi" of the plane PLN2, PND 1 can read out from the data storage section 13 a piece of additional information associated with the face F0 of "Takanawa" and a piece of additional information associated with the face F18, the latter about "○○ Restaurant."

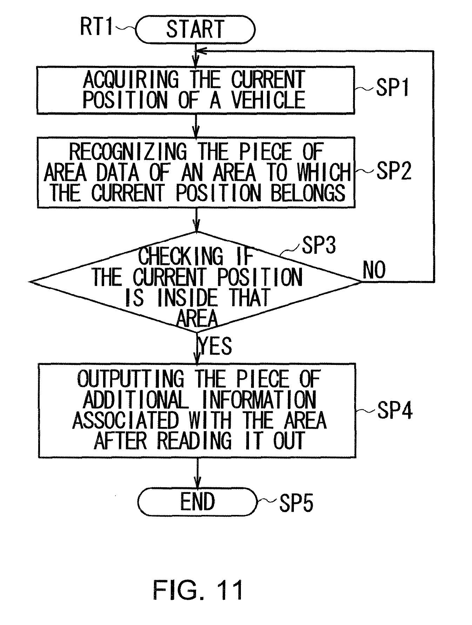

In fact, as shown in FIG. 11, CPU 10 of PND 1 starts a routine RT1 from start step and the proceeds to step SP1. At step SP1, CPU 10 controls the positioning device section 4 to acquire the current position's latitude-and-longitude information, which represents the position of the current position mark P2 (FIG. 9), or the current position of the vehicle which is stopped or traveling, and then proceeds to step SP2.

At step SP2, CPU 10 of PND 1 identifies the piece of face data (in the chome-and-banchi address system) containing the current position mark P2, from the vector map image G6, and then proceeds to step SP3.

At step SP3, CPU 10 of PND 1 makes a determination as to whether the current position mark P2 is still inside, for example, the face F18 of "Takanawa, 1-chome, 1-banchi," which was identified at step SP2.

If the negative result is obtained at step SP3, then this means the current position mark P2 is not inside the face F18; that is, the vehicle may have already entered the next face F17 at high speed. In this case, CPU 10 of PND 1 returns to step SP1 and repeat the above process.

Whereas if the affirmative result is obtained at step SP3, then this means the current position mark P2 is still inside the face F18. In this case, CPU 10 of PND 1 proceeds to step SP4.

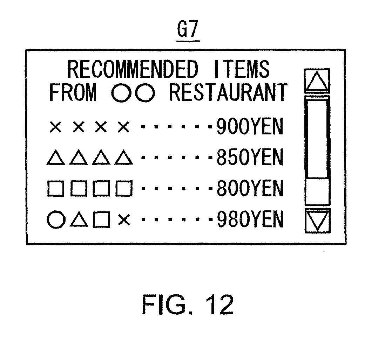

At step SP4, CPU 10 of PND 1 reads out from the data storage section 13 a piece of additional information associated with the face F18: the piece of additional information is, for example, a restaurant introduction image G7 of "○○ Restaurant," as shown in FIG. 12. CPU 10 displays this image G7 on the upper right side of the vector map image G6 (FIG. 9), and proceeds to step SP5 to end the process. Therefore, the user who drives his/her vehicle near the ○○ Restaurant can check the recommendation about foods they serve.

In that manner, when CPU 10 of PND 1 recognizes that the current position mark P2 of the traveling vehicle enters the face F18 on the vector map image G6 (which also contains other faces F11 to F22), CPU 10 reads out from the data storage section 13 the restaurant introduction image G7 which is previously associated with the face F18, and displays it. This allows CPU 10 to provide valuable information to the user at an appropriate time.

Especially, CPU 10 of PND 1 can provide the restaurant introduction image G7 (or additional information) associated with the face F18 immediately after having recognized that the current position mark P2 enters the face F18. This is expected to be able to prevent the user from passing through in front of the ○○ Restaurant before checking the image G7. Thus, the user can use the additional information effectively.

### (3-2) Process Performed When PND Is Not Situated On Vehicle

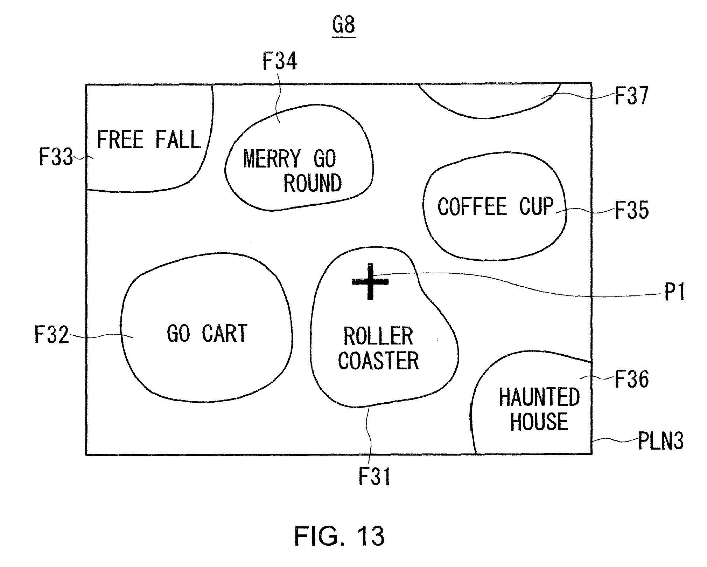

As shown in FIG. 13, on the vector map image G8 drawn to a predetermined scale, PND 1, for example, previously sets areas, or faces F31 to F37, which correspond to the attractions in an amusement park, and registers the faces F31 to F37 in the data storage section 13 such that they are associated with the predetermined pieces of additional information. If PND 1 recognizes that a user who is carrying PND1 enters the face F31 of "Roller coaster" on the map - that is, the position mark P1 of PND 1 enters the face F31 - PND 1 reads out the piece of additional information associated with the face F31 and shows it to the user.

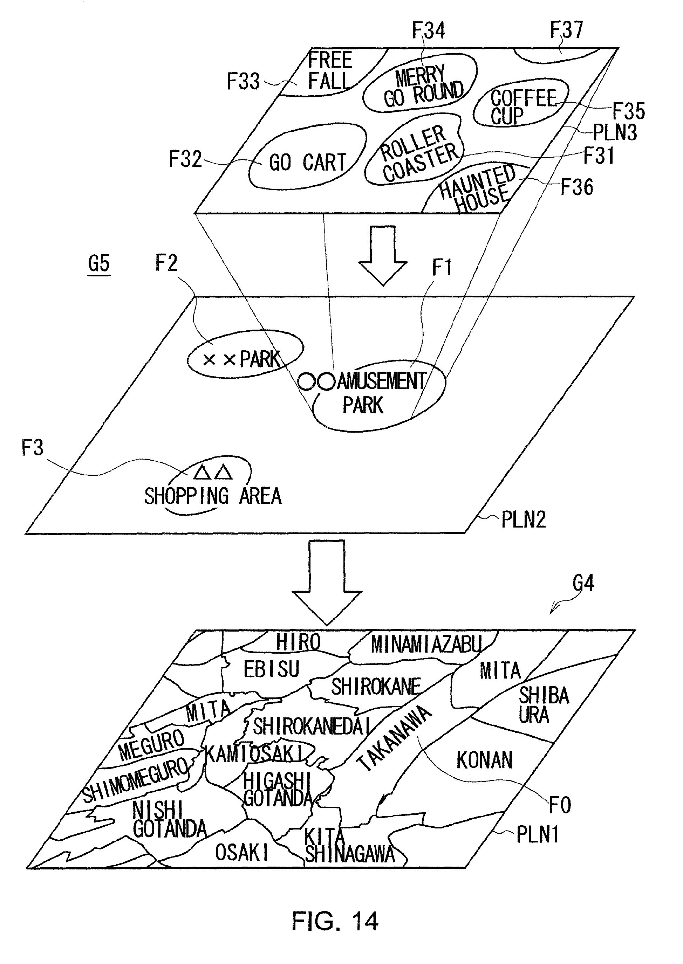

Here, PND 1 produces a vector map image G8 by piling up the plane PLN1, the plane PLN2, and a plane PLN 3 in that order, as shown in FIG. 14: the plane PLN1 (or the vector map image G4) includes a plurality of faces (including the face F0), each of which is associated with a corresponding boldface place name, while the plane PLN2 includes faces F1 to F3, or areas associated with special place names (such as an amusement park, a park, a shopping area), whose categories are different from those of the plane PLN1 and the top plane PLN 3 includes the faces F31 and F37 corresponding to the area specified by the attractions of the amusement park.

Therefore, if the position mark P1 indicating the current position of the user (FIG. 13) exists inside the face F0 of "Takanawa" (FIG. 14), the face F1 of "○○ Amusement Park" (FIG. 14), and the face F31 of "Roller coaster" which exists inside the "○○ Amusement Park," PND 1, for example, displays the piece of additional information associated with the face F31 along with the boldface place name "Takanawa" and the special place name "○○ Amusement Park": this piece of additional information could be a character frame (described later), which is read out from the data storage section 13.

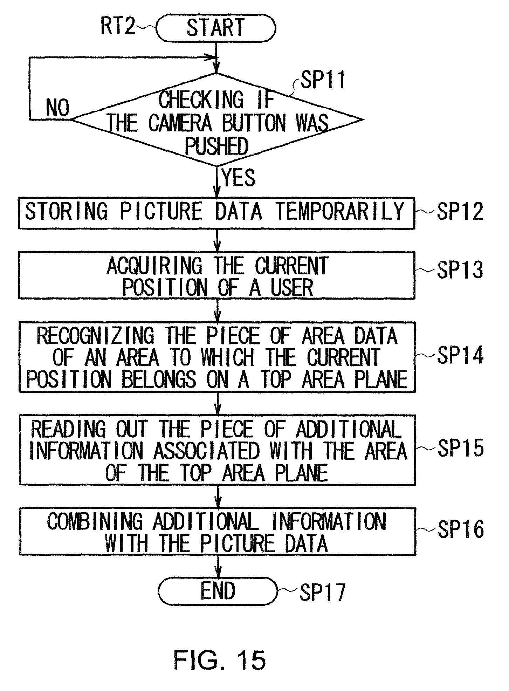

In fact, as shown in FIG. 15, CPU 10 of PND 1 starts a routine RT2 from start step and proceeds to step SP11. At step SP11, CPU 10 make a determination as to whether the camera button 25 of PND1 has been pushed by the user, or an owner of PND 1. If the negative result is obtained at step SP11, the CPU 10 returns to step SP11 and waits until the camera button 25 is pushed. If the affirmative result is obtained, CPU 10 proceeds to step SP12.

At step SP12, CPU 10 of PND 1 takes a picture by the CCD camera 14 after the camera button 25 is pushed and stores the picture data in RAM 12 temporarily, and then proceeds to step SP13.

At step SP13, CPU 10 of PND 1 controls the positioning device section 4 to acquire a piece of latitude-and-longitude information of the position mark P1 which indicates the position where the user took the picture by the CCD camera 14, and then proceeds to step SP14.

At step SP14, CPU 10 of PND 1 detects a piece of face data for the face F31 (of "Roller coaster" on the top plane PLN3 of the vector map image G8 (FIG. 13), in this case) in which the position mark P1 indicating the current position exists, and then proceeds to step SP15.

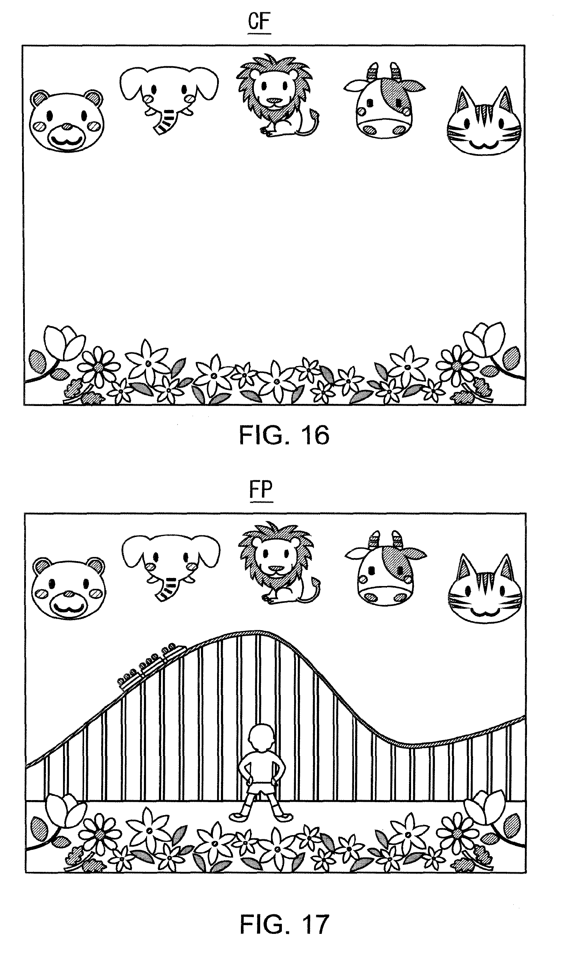

At step SP15, CPU 10 of PND 1 reads out from the data storage section 13 a character frame CF (as shown in FIG. 16) as the piece of additional information associated with the face F31, and then proceeds to step SP16.

The character frame CF (FIG. 16) is a template image that includes images of characters and flowers around its edge, so that, after it is combined with another picture showing a person, they surround that person.

At step SP16, CPU 10 of PND 1 combines the character frame CF with the picture data that was stored at step SP12 in the RAM 12, generating a composite picture FP for example as shown in FIG. 17. Subsequently, CPU 10 proceeds to step SP17 to end the process.

In that manner, after taking a picture by using the CCD camera 14, CPU 10 of PND 1 detects the piece of face data of the face F31 in which the position mark P1 indicating the current position of the user exists, reads out the character frame CF associated with the face F31, and then combines the character frame CF with the picture data, generating the composite picture FP which includes the character frame CF related to the current position ("Roller coaster," in this case).

### (4) Operation and Effect

As described above, PND 1 can be situated inside a vehicle. If the vehicle, or its current position mark P2, enters the face F18 of the vector map image G6 (FIG. 9), PND reads out from the data storage section 13 the piece of additional information (or the restaurant introduction image G7) associated with the face F18, and displays it. This allows the user to know valuable information at an appropriate time when he/she is traveling near that ○○ Restaurant (or the face F18).

This piece of additional information, or the restaurant introduction image G7, is associated with the face F18 in which "○○ Restaurant" exists, not with the piece of latitude-and-longitude information of "○○ Restaurant." Therefore, as soon as the current position mark P2 enters the face F18, the restaurant introduction image G7 is read out and displayed, even if the current position mark P2 of the traveling vehicle is not so close to the restaurant.

This means that the user can check the restaurant introduction image G7 before he/she passes through in front of the restaurant, giving him/her enough time to decide whether to pull into the restaurant. In this manner, PND 1 can add value to the additional information in commercial terms.

Moreover, PND 1 can be detached from the vehicle to allow the user to carry outside the vehicle. If the position mark P1 indicating the current position of the user enters the face F31 of the vector map image G8, the picture taken by the camera of PND 1 is combined with the character frame CF associated with the face F31, generating the composite picture FP (FIG. 17).

This piece of additional information, or the character frame CF, is associated with the face F31 in which "Roller coaster" exists, not with the piece of latitude-and-longitude information of "Roller coaster." Therefore, as soon as the current position mark P1 enters the face F31, the character frame CF is read out and used to produce the composite picture FP, even if the current position mark P1 is not so close to the roller coaster.

In comparison with conventional one that associates the piece of additional information with the piece of latitude-and-longitude information and provides the certain piece of additional information when the current position match the certain piece of additional information, since the pieces of additional information are associated with the face F31 of the vector map image G8, PND 1 can widen a district of the user's current position when providing a certain piece of additional information.

In that manner, PND 1 automatically combines the valuable piece of additional information, or the character frame CF, with the picture that was taken by the user when his/her current position mark P1 existed within the face F31 of the vector map image G8, generating the composite picture FP. Without any special operation, the user can obtain the composite picture FP by just pushing the camera button 25 near the roller coaster. This improves its operability.

Furthermore, PND 1 uses the vector map image G6 (FIG. 9) and the vector map image G8 (FIG. 13): the vector map image G6 is generated by piling up the planes PLN1 and PLN2 whose genres are different from each other, while the vector map image G8 is generated by piling up the planes PLN1, PLN2, and PLN3 whose genres are different from each other. Accordingly, PND 1 can offer the pieces of additional information associated with each plane PLN1, PLN2, and PLN3 at the same time according to the position of the position mark P1 or current position mark P2.

That is, CPU 10 of PND 1 can efficiently and effectively provide different genres of additional information, each of which belongs to a different plane PLN1, PLN2, or PLN3, according to the current position of the position mark P1 or current position mark P2 on those planes PLN1, PLN2 and PLN3.

According to the above configuration, whether PND 1 is situated on the vehicle or not, PND 1 can immediately read out and offer the piece of additional information associated with the face in which the current position exists under any communication circumstances, after recognizing which face the position mark P1 or current position mark P2 belongs to on the vector map image G6 or G8. Since the pieces of additional information are associated with the faces, not with the points, PND 1 can offer them at an appropriate timing: PND 1 can widen the area of current position which can be provided the pieces of additional information. This improves its operability.

### (5) Other Embodiments

In the above-noted embodiment, if the current position mark P2 exists in the face F0 of "Takanawa" on the vector map image G6 and also inside the face F18 of "Takanawa 1-Chome, 1-Banchi," PND1 reads out and displays the pieces of additional information - both a string of characters "Takanawa" and the restaurant introduction image G7. However, the present invention is not limited to this. If PND1 displays such maps as the vector map image G6 including a plane PL2, PND 1 may only display the restaurant introduction image G7 associated with the face F18 of the top plane PLN2, without displaying a string of characters "Takanawa" associated with the face F0 of the plane PLN1.

Moreover, in the above-noted embodiment, the additional information read out from the data storage section 13 are the restaurant introduction image G7, the character frame CF, and the like. However, the present invention is not limited to this. The additional information may include text data, audio data, music data, motion-picture data, game programs, and other contents.

Furthermore, in the above-noted embodiment, the pieces of additional information are associated with the face F0 (categorized by boldface place name), the faces F1 to F3 (categorized by special place name), the faces F11 to F22 (categorized based on the Japanese postal address system), and the faces F31 to F37 (categorized by attraction of the amusement park). However, the present invention is not limited to this. Faces to be associated with the pieces of additional information may be determined by users. This allows PND 1 to offer the pieces of additional information that match the needs and wants of the users at an appropriate time.

Furthermore, in the above-noted embodiment, CPU 10 of PND 1 executes the additional information providing program to perform the routines RT1 and RT2 of additional information providing process. The additional information providing program may be installed from a recording medium, downloaded from the Internet, or installed in other ways.

Furthermore, in the above-noted embodiment, an information processing device of an embodiment of the present invention includes the monitor 41, which serves as display means; the data storage section 13, which serves as face data storage means and additional information storage means; the positioning device section 4, which serves as current position identification means; and CPU 10, which serves as additional information output means. However, the present invention is not limited to this.
The information processing device can be configured in different ways, so that it can realize the display means, the face data storage means, the additional information storage means, the current position identification means, and the additional information output means.

The above information processing device, additional information providing method and additional information providing program can be applied to PND as well as other information processing devices, including a cell phone having a GPS module, PDA including a GPS module, and a notebook-type personal computer including a GPS module.

It should be understood by those skilled in the art that various modifications, combinations, sub-combinations and alterations may occur depending on design requirements and other factors insofar as they are within the scope of the appended claims or the equivalents thereof.

## Claims

1. An information processing device comprising:
display means for displaying a map image based on map data;
face data storage means for storing districts corresponding to specific areas of the map image as faces of the map image;
additional information storage means for storing pieces of additional information associated with the faces;
current position identification means for identifying a current position on the map image; and
additional information output means for making a determination as to whether the current position is inside the face, and if the current position is inside the face, reading out and outputting the piece of additional information associated with the face.

2. The information processing device according to claim 1, further comprising
face display control means for displaying the districts represented by the faces on the image map so that the districts are distinguishable.

3. The information processing device according to claim 2, wherein
the face data storage means stores districts corresponding to new areas categorized in a different way from the faces as second faces; and
the face display control means displays the districts represented by the faces on the image map so that the districts are distinguishable, and also displays the second facess on the faces.

4. The information processing device according to any of claims 1 to 3, wherein
the additional information include a string of characters, images and audio data.

5. The information processing device according to any of claims 1 to 4, wherein
the additional information include a predetermined design of template used for taking a still image.

6. An additional information providing method comprising:
a display step of displaying on predetermined display means a map image based on map data
a current position identification step of identifying a current position on the map image by using current position identification means;
a determination step of reading out the faces from the face data storage means that stores districts corresponding to specific areas of the map image as faces of the map image and of making a determination as to whether the current position is inside the faces; and
an additional information output step of reading out the piece of additional information from the additional information storage means that stores a piece of additional information associated with the face by using additional information readout means and then outputting it, if the current position is inside the face.

7. The additional information providing method according to claim 6, further comprising
a face display control step of displaying the districts represented by the faces on the image map so that the districts are distinguishable.

8. The additional information providing method according to claim 7, wherein
the face data storage means stores second faces which are associated with new areas categorized in a different way from the faces; and
the face display control step displays the districts represented by the faces on the image map so that the districts are distinguishable, and also displays the second faces on the faces.

9. The additional information providing method according to any of claims 6 to 8, wherein
the additional information include a string of characters, images and audio data.

10. The additional information providing method according to any of claims 6 to 9, wherein
the additional information include a predetermined design of template used for taking a still image.
